# EUROPEAN PATENT APPLICATION

(11) **EP 0 647 795 A1**
(43) Date of publication of application: **12.04.1995**
(21) Application number: 94115924.6
(22) Date of filing: 10.10.1994
(51) Int. Cl.: F16F 9/04, F16F 9/42, B60G 11/28

(54) **Piston for air springs, particularly for vehicle suspensions**

(30) Priority: 11.10.1993 IT MI932146
(71) Applicant: PSA SISTEMI ANTIVIBRANTI S.P.A., I-25050 Passirano (Brescia) (IT)
(72) Inventor: Ugazio, PierAngelo, I-20143 Milano (IT)
(74) Representative: Lecce, Giovanni

(57) **Abstract**

An air spring comprises a piston (1) whose main body (9) has a working portion (12) tightly and circumferentially engaging a flexible membrane (6) and a base portion (10) secured to a structure (3a) of the vehicle.
The working (12) and base (10) portions are interconnected by a substantially cylindrical connection wall (11). An auxiliary wall (13) defining a rolling surface (13a) for a circumferential lobe (8) of the membrane (6) extends from the working portion (12) in a position spaced from the connection wall (11).
A hollow space (15) for the thermal exchange communicating with the outside is defined between the auxiliary wall (13) and the connection wall (11).
The main body (9), made of plastic material,is connected to the structure (3a) of the vehicle by means of an anchor plate (18) secured to the connection wall (11) portion (10) through a forced inserting at the base .

## Description

The present invention relates to a piston for air springs. More particularly, the present invention relates to a piston for air springs suitable for vehicle suspensions, comprising a main body having; a base portion rigidly engageable to a vehicle structure to which said suspension is associated; a working portion opposite to said base portion and tightly engaging circumferentially an end edge of a flexible membrane filled with a fluid compressible under pressure; a connection wall extending between the base portion and the working portion; a hermetic seal wall engaged with the connection wall along the perimeter; a shaped rolling surface facing externally the main body and arranged to act as a biassing surface with a circumferential lobe formed by said membrane around the main body itself.

As known, the air springs for vehicle suspensions in general comprise essentially a flexible membrane whose opposite ends are tightly engaged with a connection device and a so-called piston, respectively; on their turn, these latter are secured to corresponding vehicle structures which, mostly are associated to a suspended mass and an earthed mass, respectively, mutually connected by the suspension.

More particularly, the piston consists essentially of a main body having in the upper part a working portion to which the corresponding end edge of the membrane is tightly engaged. Said working portion is joined in one piece, through a connection wall of suitable shape and axial extension, with a base portion at which, the connection of the piston itself with the corresponding vehicle structure takes place through treaded elements or equivalent securing means.

Inside the membrane there is a closed space, hermetically insulated from the outside, in which there is air or other compressible operative fluid which is kept under pressure so as to elastically oppose the vertical loads transmitted by the suspended mass through the connection device. Therefore the above said vertical loads are transmitted to the piston and, through this latter, to the earthed mass, under the effect of the pressure acting on the surfaces of the piston itself.

Therefore it is necessary that the piston, being constantly subjected to all the vertical loads transmitted by the suspended mass to the earthed mass, has a considerable structural resistance to the axial loads. In this connection it is to be noted that in a lot of applications, as for example in the suspensions for railway carriages, trailers and the like, the entity of said axial loads can reach and exceed values of 10,000 kg or more.

In use condition, the approach of the piston to the connection device, in opposition to the elastic reaction exerted by the air under pressure, causes the inflection of the membrane so as to form, around the piston itself, a circumferential lobe that, always in consequence of the pressure existing inside the membrane, acts as a biassing means on a rolling surface represented externally by the connection wall of the piston, discharging on this latter considerable centripetal radial stresses that go to add to the above mentioned axial loads.

The circumferential lobe formed by the membrane is subject to engage a more or less relevant portion of the rolling surface in relation to the occuring mutual approaches and separations during running, between the suspended mass and the earthed mass. Therefore it is evident that the shape of the rolling surface is of essential importance as all the deformations suffered by the membrane and, consequently, the entity of the mutual movements induced between the suspeded mass and the earthed mass, in consequence of the variations of the axial load, depend on it.

However, the choice of the shape to give to the rolling surface cannot leave out of consideration the problems linked to the needs of granting a suitable structural resistance ot the piston, together with a weight as reduced as possible.
According to the more conventional embodiments, in order to grant a sufficient structural resistance to the piston, it is made of metal forged through a sequence of cold drawing operations. In the range of the search of new technical solutions directed to simplify the embodiment of the air springs, by reducing their manufacturing costs, as well as the entity of the earthed masses connected to the suspension the Applicant has developped and set up a piston for air springs made of plastic material moulded by injection. This piston for air springs is the subject matter of published European patent EP -A- 0296445.
According to the present invention, it has been found that by performing the rolling surface on an auxiliary wall suitably spaced from the connection wall, it is possible to provide the rolling surface with any whatsoever desired shape independently of problems relating to weight, structural resistance and cost of the piston realization, achieving also a continuous and effective elimination of the heat produced owing to the compression of the air or other operative fluid contained in the membrane.

In particular, the invention concerns a piston for air springs, particularly suitable for vehicle suspensions, characterized in that said shaped rolling surface in performed outwardly of an auxiliary wall extending coaxially from the working portion in a position spaced from said connection wall at least a hollow space for the thermal exchange communicating with the outside being defined between said auxiliary wall and said connection wall.

Advantageously, the main body and tha auxiliary wall are obtained in one piece of plastic material moulded by injection, and an anchor plate fixed to the base portion of the main body and supporting means for engaging with the vehicle structure is provided.
In a preferred embodiment, the auxiliary wall extends according to a perimetric development circumscribing externally the anchor plate and prolongs axially beyond the base portion and the anchor plate itself.

The anchor plate has advantageously a plurality of restraining teeth distributed along the perimeter and arranged to hold the main body through respective end portions turned up radially toward the center of the anchor plate itself.

More particularly, the main body is coupled with the anchor plate by inserting in a forced manner the base portion between the restraining teeth, so that a mechanical interference of the restraining teeth themselves is produced on said connection wall.

For said mechanical interference, the end portions of the restraining teeth define, in the free state, a clutch slot having a diameter smaller than the outer diameter of the connection wall according to a size comprised between 80 and 240 mm, said anchor plate being made of metallic material.
Also it is provided that the end portions of the restraining teeths act on the connection wall at a distance from one end edge of said base portion comprised between 20% and 70%, preferably between 30% and 60%, of the total axial extension of the connection wall itself.

According to a preferred embodiment, the piston comprises moreover first reinforcing radial ribs circumferentially distributed and operatively engaged between said auxialiary wall and said connection wall, as well as second reinforcing ribs radially oriented and circumferentially distributed inside the connection wall itself. The first ribs are twice the second ribs; each of said second ribs being oriented according to a direction coiciding with a median radius comprised between two of said first ribs.

Advantageously, each restraining tooth is at least partially interposed between the first reinforcing ribs.
Preferably, the hermetic seal wall is provided with an abutment rod arranged to act coaxially on one end of a threaded element constituting said means for engaging with the vehicle structure.
The characteristics and advantages, of the present invention will be better evident from the following detailed description of with reference to a preferred, but not exclusive, embodiment, of a piston for air springs, particularly for vehicle suspensions, subject matter of the present invention. Said description will be made hereinafter with reference to figures the attached drawings, given only by way of non-limiting example, in which:
- FIGURE 1: represents a lateral schematic view of an air spring operatively effectively associated to a vehicle suspension;
- FIGURE 2: represents a broken section showing, in enlarged scale with respect to figure 1, the piston according to the present invention operatively interposed between a membrane of the air spring and a vehicle structure, making part of the earthed mass associated to the suspension;
- FIGURE 3: represents a schematic view of a section along line III-III of figure 2;
- FIGURE 4: represents the broken perspective view of a particular of the connection between an anchor plate and the piston of the present invention;
- FIGURE 5: represents a schematic side view of the piston of the present invention, setting forth the different profiles of the rolling surface;
- FIGURE 6: represents an indicative curve illustrating the variation of the functional characteristics of the air spring in relation to the different profiles given to the rolling surface.

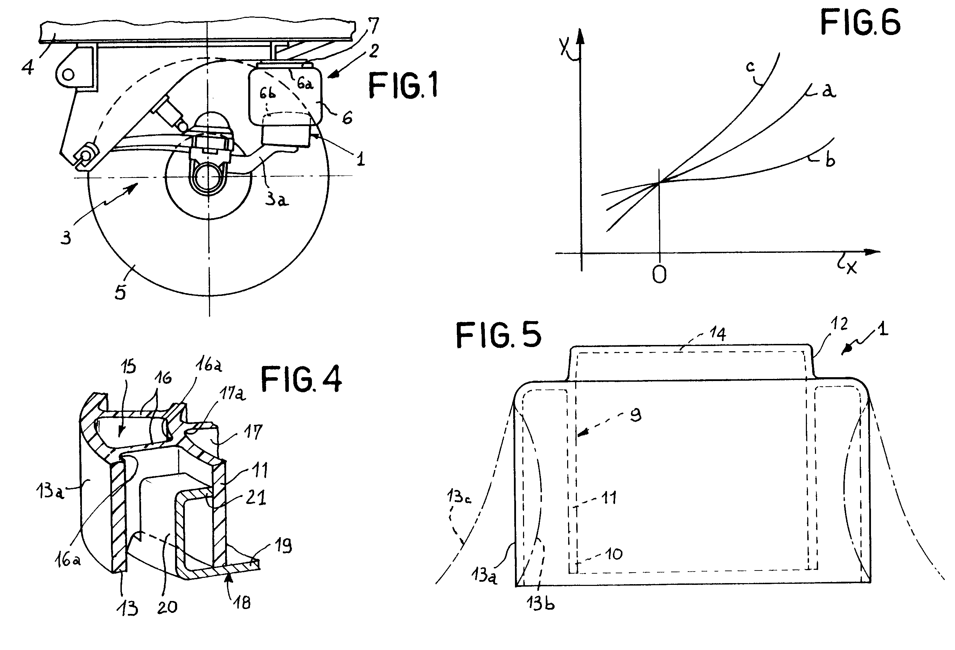

With reference to the cited figures, reference numeral 1 indicates a piston for air springs as a whole, particularly suitable for vehicle suspensions, according to the present invention.
Piston 1 is associated to an air spring 2 that, as visible from figure 1, is suitable for elastically supporting a so-called suspended mass, constituted for example by a frame 4 of a vehicle, with respect to an earthed mass comprising a wheel 5 interconnected to the frame itself by means of a suspension 3 of which said air spring 2 forms an integrating part.

In this respect, according to a per se known embodiment, the air spring 2 comprises a flexible membrane 6 having an essentially tubular section, provided with an upper end edge or bead 6a engaged with tight to a connection device 7 integral with the frame 4, as well as with a lower end edge 6b operatively engaged with tight to the piston 1.

The membrane 6 comprises at its inside a plurality of filaments threads, preferably of textile filaments, resistant to tensile stresses, arranged parallely to each other and to the longitudinal axis of the membrane. The ends of the filaments are turned-up so as to form a loop around the beads generally constituted, as known, by metallic rings.
The flexible membrane 6 is filled with air or other operative fluid under pressure, that is suitable for elastically reacting to the axial loads transmitted to the air spring 2 as a whole because of the weight of the suspended mass and/or the stresses transmitted by the earthed mass during running.

The variations of the axial loads transmitted through the air spring 2 determine corresponging variations of the air volume contained inside the flexible membrane 6, in consequence of a mutual approach and/or separation between the piston 1 and the connection device 7. Always in a way known per se, to said actions it does also correspond a mutual movement between the piston 1 and a circumferential lobe 8 defined by the flexible membrane 6 around the piston itself.
That being stated, the piston 1 comprises a main body 9 having a base portion 10 rigidly engageable to a swinging bar 3a, making part of the suspesion 3, or to any whatsoever structure of the vehicle, as it will be better cleared up hereinafter.

A connection wall 11 is connected to the base portion 10; the end of said connection wall, opposite to the base portion, is connected to a working portion 12 around which the lower end edge 6b of the membrane 6 is engaged with tight through known and conventional means (not shown in the figures).

A hermetic seal wall 14 is engaged with the connection wall 11 along the perimeter. The function of the wall 14 is essentially that of hermetically insulating the inside of the flexible membrane 6 from the outside, as well as to receive a prevalent part of the axial thrusts deriving from the pressure existing inside the membrane itself.

Advantageously, said hermetic seal wall 14, extending preferably according to a diametral plane, can be positioned in any point of the axial development of the connection wall 11, in relation to the functional characteristics that it is wished to give to the spring 2. In the embodiment shown in figure 1 with a continuous line, the hermetic seal wall 14 is arranged near the working portion 12, In this situation, the air spring 2 will have a relatively rigid behaviour.
Instead, in the alternative embodiment shown with a dashed line, the hermetic seal wall 14 is arranged near the base portion 10. In this situation the behaviour of the spring 2 will be less rigid since the volume occupied by the operative fluid inside the membrane 6 results to be increased, with respect to the previously described embodiment, in a measure substantially equal to the space defined inside the connection wall 11.

In this case, at the dashed wall 14, there is an upper part near the portion 12 completely open and delimited by the wall 11 or in other embodiments a surface protruding from the wall 11 toward the center where it forms a suitable opening to put into communication the fluid of the membrane with that inside the piston.
At first, as clearly shown by figure 1, an auxiliary wall 13 coaxially spaced with respect to the connection wall 11 extends from the working portion 12. The auxiliary wall 13 defines externally a shaped rolling surface 13a wich is suitable for acting as a biassing surface with the circumferential lobe 8 so as to oppose adequately the radial thrusts and the possible axial components transmitted by the lobe itself in consequence of the fluid pressure existing inside the membrane 6.

At least a hollow space 15 for the thermal exchange communicating with the outside is advantageously defined between the auxiliary wall 13 and the connection wall 11. Thanks to the presence of said hollow space, the heat, produced in consequence of the compression of the operative fluid inside the membrane 6 and transmitted to the connection wall 11 and/or the auxiliary wall 13 through the membrane itself, can be easily evacuated outside.

Advantageously, the auxiliarly wall 13 and the main body 9 are made in a single piece of plastic material moulded by injection. More precisely, the material used is constitued by a composite material comprising a thermosetting resin, for example a polyester resin known with the trade name SMC, appropriately reinforced with glass fibers or other fibers.

Other thermoplastic materials for the piston can be polyamide 6,6, nylon, polypropylene, acetal resin, ABS and recycling plastics.
Advantageously to confer a suitable resistance to the centripetal radial stresses to the auxiliary wall 13, it is provided that between the auxiliary wall itself and the connection wall 11 there is a pluritaly of first reinforcing ribs 16 circumferentially distributed and oriented radially toward the axis of the main body 9 and operatively joined in one piece to the walls themselves.
Moreover, in order to confer an adequate structural resistance to the piston 1 as a whole, it is also provided that inside the connection wall 11 there is a plurality of second reinforcing ribs 17 circumferentially distributed and arranged according to a radial direction and operatively joined in one piece to the connection wall itself and to the hermetic seal wall 14.

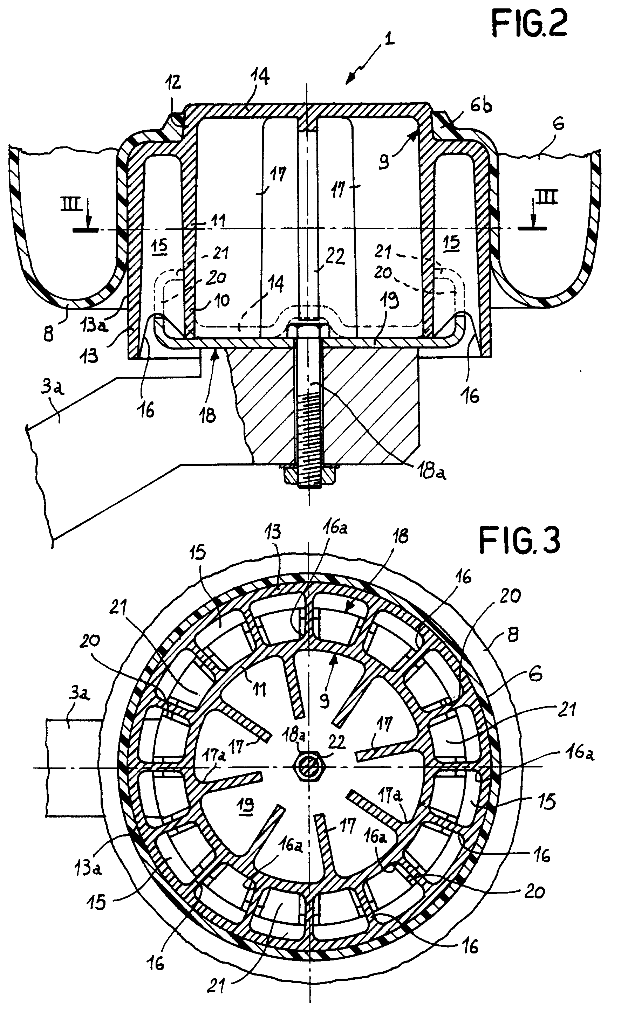

Preferably, as shown in figure 3, the first ribs 16 are twice the second ribs 17, and each of these second ribs is aligned according to a direction coinciding with a median radius comprised between two of the first ribs themselves.
As clearly shown in figures 2 and 3, in order to avoid any problem consequent to the shrinkage of the plastic material during the cooling step after the moulding, it is advantageously provided that the connection wall 11 and the hermetic seal wall 14 forming the main body 9, as well as the auxiliary wall 13, have a thickness substantially equal to each other.

On their turn, the first ribs 16 have a thickness comprised between 3 and 6 mm., preferably equal to 80% of the thickness of the above said auxiliary wall 13, connection wall 11 and hermetic seal wall 14. The second ribs 17 have a thickness substantially equal to that of the connection wall 11.

Moreover, each of the first and second ribs 1, 17 is connected to the respective auxiliary wall 13 and/or connection wall 11 by means of circle arc shaped connections 16a, 17a.
Always according to the present invention, the piston 1 is interconnected to the suspension 3 throught at least an anchor plate 18 fastened to the base portion 10 of the main body 9 and bearing engaging means consisting of for example at least a locking bolt 18a for the connection to the swinging bar 3a or other vehicle structure to which the suspension is associated.

Said anchor plate 18, made preferably of metallic material moulded by shearing and cold bending, has a substantially plane base wall 19 crossed at the center by the locking bolt 18a and supporting the main body 9 at the base portion 10.

The base wall 19 is associated with a plurality of restraining teeth 20 distributed along the perimeter and arranged in such a way as to hold the main body 9 through respective end portions 21 turned radially toward the center of the anchor plate 18.
More precisely, the main body 9 is coupled to the anchor plate 18 by inserting in a forced manner the base portion 10 between the restraining teeth 20, so as to create a mechanical interference of the restraining teeth themselves, and more precisely of their end portions 21, on the connection wall 11. To this end, preferably it is provided that the end portions 21 of the restraining teeth 20 define, in the free condition and i.e. when the anchor plate 18 is not engaged with the main body 9, a clutch slot whose inner diameter is smaller than the outer diameter of the connection wall 11 in the zone of engagement with the teeth themselves, according to a size comprised between 80 and 240 mm.

In order to facilitate the forced coupling of the anchor plate 18, it can be further provided that the connection wall 11 has an outer slight taper, diverging towards the working portion 12 acording to a vertex angle comprised between 0.5 and 5 (degrees).

Advantageously the presence of the restraining teeth 20, each getting into at least in part between two of the first ribs 16, determines a so-called "ring" effect on the connection portion 11. Said ring action helps the action of the first and second ribs 16. 17 in order to prevent the collapsing of the connection wall itself under the effect of buckling loads, especially in the case in which the hermetic seal wall 14 is arranged near the base portion 10. In this respect, it is preferred that the end portions 21 of the restraining teeth 20, act on the connection wall 11 at a distance from an end edge 10a of the base portion 10 comprised between 20% and 70%, and preferably equal to 50% of the whole extension of the connection wall itself, so that the free length this latter is adequately limited for the purposes of the lateral inflection.

The teeth and the remaining portion of the plate can be made and shaped of drawn stamped plate or steel, aluminium and its alloys or cast iron and they have a thickness that can be comprised between 2 and 8 mm.

When the hermetic seal wall 14 is arranged near the working portion 12 or anyhow at a relevant distance from the base wall 19 of the anchor plate 18, the hermetic seal wall itself is preferably associated to at least an abutment rod 22 arranged to act coaxially on one end of the bolt 18a or other threaded element consituting the above said engaging means, in order to prevent the bolt itself, slidingly inserted through the above mentioned base wall, from falling inside the main body 9 in consequence of an upsetting of the piston 1 during transport, storing and/or assemblig. When the hermetic seal wall 14 is arranged near the base portion 10, the stop of the bolt 18a takes place directly against the seal wall itself.

As shown in figure 2, the auxiliary wall 13 extends advantageously according to a perimetric development that encircles externally the anchor plate 18. Therefore, it is possible to take care that the auxiliary wall 13, as foreseen in the illustrated embodiment, extends axially beyond the base portion 10 of the anchor plate 18. After all, this prerogative allows to provide the rolling surface 13a with any whatsoever axial development according to the requirements, without meeting the limits of the known technique, wherein, being the rolling surface obtained on the connection wall between the base portion and the working portion of the piston, the axial extension of the rolling surface was closely linked to the axial dimension of the main body 9.

According to the present invention, the piston 1, is characterized by extremely compact dimensions although the rolling surface 13a is provided with the desired axial development.
Moreover, the auxiliary wall 13 can advantageously be shaped according to any whatsoever wished form to achieve the desired characteristics of reaction to the axial stresses to the air spring 2 as a whole, In particular, as clearly shown in figures 5 and 6, by appropriately shaping the auxiliary wall 13 it is possible to confer to the rolling surface 13a a cylindrical configuration, as indicated with a continuous line, or a concave profile configuration, as shown with a dashed line 13b, or also an arcuate profile diverging away from the working portion, as shown by the dashed line 13c. The above profiles 13a, 13b, 13c correspond respectively to the curves indicated with "a", "b" and "c" in the graph of figure 6, relating to the reactions opposed by the air spring 2, indicated on the axis of the ordinates "Y", in relation to the axial movements of the piston 1 with respect to the connection device 7, brought again on the axis of the abscisse "X".
The choice of the shape and dimensions to give to the auxiliary wall 12 on planning the springs 2 is practically not influential for the structural resistance of the connection wall 11, which has the task of supporting the larger part, if not the totality, of the axial loads acting on the piston 1. Therefore it is achieved an excellent freedom of planning in respect of the size and structural characteristics of the rolling surface 13a, unlike what that may be found in the known technique where, being said surface obtained directly on the wall connecting the base portion and the top portion of the piston, its structural and size planning had also to keep into account the axial loads transmitted to the piston.
It is to be observed that the present state of the tecnique, where the plan tendency is that of simplify as much as possible the structure of the piston, the addition of the auxiliary wall could appear an unjustified technical complication of the piston structure. In the light of said consideration, the advantages deriving from the reduction in weights and costs for the realization of the piston, the absolute freedom of planning the rolling surface 13a and connection wall 11 in a way completely independent of one another, as well as the elimination of heat obtained through the hollow space 15, result quite unexpected.

A further advantage is constitued by the fact that a plate 18 of predetermined and uchanged sizes can receive by means of an elastic mechanical interference pistons having heights and/or rolling surfaces different from one another: for instance in the same vehicle it is possible to use on all the axes in the various positions an equal plate 18 and then to associate on an axis pistons having a given height size in relation to a determinate air spring and on another axis pistons of different height for an air spring having deformability characteristics different from the preceeding spring.
Further on, it is evident how the characteristic of elastic action permits to insert on a plate provided with teeth 20, pistons that although having to have equal plan dimensions, as a matter of fact they have diameters of the wall 11 different among them.

In practice, it is possible to advantageously increase the size tolerance limits of the pistons.
Of course, the invention so formulated can include modifications and variants without departing from its inventive concept, for instance it is possible to realize a piston of metal associated with a metallic plate 18.

## Claims

1. A piston for air springs, particulary for vehicle suspensions, comprising a main body (9) having:
- a base portion (10) rigidly engaged to a structure (3a) of a vehicle to which said suspension (2) is associated;
- a working portion (12) opposed to said base portion (10) and circumferentially engaging with tight the end edge (6b) of a flexible membrane (6) filled with a compressible fluid under pressure;
- a connection wall (11) extending between the base portion (10) and the working portion (12);
- a hermetic seal wall (14) engaging with the connection wall (11) along the perimeter;
- a shaped rolling surface (13a) facing externally the main body (9) and arranged to act as a biassing surface with a circumferential lobe (8) formed by the membrane (6) around the main body itself; characterized by the fact that:
a) said shaped rolling surface (13a) is defined externally to an auxiliary wall (13) coaxially extending from the working portion (12) in a position spaced from said connection wall (11); and
b) at least a hollow space for a thermal exchange with the outside is defined between said auxiliary wall (13) and said connection wall (11).

2. The piston according to claim 1, characterized in that said main body (9) and said auxiliary wall (13) are obtained in one piece of plastic material moulded by injection.

3. The piston according to claim 1 or 2, characterized in that it comprises moreover an anchor plate (18) secured to the base portion (10) of the main body (9) and bearing means (18a) for engaging with the vehicle structure (3a).

4. The piston according to claim 1 or 2, characterized in that it comprises
an anchor plate (18) secured to the base portion (10) and bearing elastic gripping means (18a) the auxiliary wall (13) extending according to a perimetric development encircling externally said anchor plate (18).

5. The piston according to claim 1 or 2, characterized in that it comprises an anchor plate (18) secured to the base portion (10) and bearing elastic gripping means (18a). The auxiliary wall (13) extending axially beyond the base portion (10) and the anchor plate (18).

6. The piston according to anyone of the preceding claims, characterized in that the anchor plate (18) secured to the base portion (10) and bearing elastic gripping means (18a) is provided with a plurality of restraining teeth (20) distributed along the perimeter and arranged to hold the main body (9) through respective end portions (21) turned up radially toward the center of the anchor plate itself.

7. The piston according to claim 6 characterized in that the main body (9) is associated to the anchor plate (18) by inserting in a forced manner the base portion (10) between the restrainig teeth (20), so that a mechanical interference of the restraining teeth themselves is produced on said connection wall (11).

8. The piston according to anyone of the preceding claims, characterized in that said anchor plate (18) is made of metallic material.

9. The piston according to claim 6, characterized in that the end portions (21) of the restraining teeth (20) define, in the free condition. a clutch slot having a diameter smaller than the outer diameter of the connection wall (11) according to a size comprised between 80 and 240 mm.

10. The piston according to claim 6, charaterized in that the end portions (21) of the restraining teeth (20) act on the connection wall (11) at a distance from the end edge (10) of said base portion (10) comprised between 20% and 70% of the total axial extension of the connection wall itself.

11. The piston according to anyone of the preceding claims, characterized in that it comprises moreover first radial reinforcing ribs (16) circumferentially distributed and effectively engaged between said auxiliary wall (13) and said connection wall (11).

12. The piston according to claim 11, characterized in that it comprises moreover second reinforcing ribs (17) radially oriented and circumferentially distributed inside the connection wall (11).

13. The piston according to claim 12, characterized in that said first ribs (16) are twice the second ribs (17) and each of said second ribs (17) are oriented according to a direction coincindig with a median radius comprised between two of said first ribs (16).

14. The piston according to claim 6, characterized in that each restraining tooth (20) is at least partially interposed between the first reinforcing ribs (16) extending radially between the auxiliary wall (13) and the connection wall (11).

15. The piston according to anyone of the preceding claims, characterized in that the hermetic seal wall (14) extends diametrally near said working portion (12).

16. The piston according to anyone of the preceding claims, characterized in that the hermetic seal wall (14) extends diametrally near said base portion (10).

17. The piston according to anyone of the preceding claims, characterized in that said hermetic seal wall (14) is associated with an abutment rod (22) arranged to coaxially act on one end of the engaging means (18a).
